# EUROPEAN PATENT APPLICATION

(11) **EP 4 325 217 A1**
(43) Date of publication of application: **21.02.2024**
(21) Application number: 22755621.4
(22) Date of filing: 15.02.2022
(51) Int. Cl.: G01N 30/00, F24F 3/14, B01D 53/26, B01J 20/30

(54) **CONTINUOUS MEASURING DEVICE FOR AIR QUALITY MEASUREMENT EQUIPMENT AND METHOD FOR MEASURING AIR QUALITY USING SAME**

(30) Priority: 16.02.2021 ES 202130118
(71) Applicant: Hop Ubiquitos, S.L., 30562 Ceuti (Murcia) (ES)
(72) Inventor: CUEVAS MARTÍNEZ, Iris, 30562 CEUTI (Murcia) (ES); JARA VALERA, Antonio Jesús, 30562 CEUTI (Murcia) (ES)
(74) Representative: Herrero & Asociados, S.L.
(86) International application number: PCT/ES2022/070076
(87) International publication number: WO 2022/175576

(57) **Abstract**

Continuous particle meter for air quality measuring equipment, comprising a particle sensor (3); a gas sensor (4); air conduction means; means of control and; at least a first and a second drying column (1, 2) comprising adsorption means with regenerative capacity; two separate temperature and humidity sensors (8); an infrared light bulb (9); and a humidity filtering membrane (10).

Air quality measuring procedure comprising the inlet of air through at least a first drying column (1), for the adsorption of its humidity before passing through the particle sensor (3) and its outlet, and the inlet of air through the gas sensor (4) and its output through at least a second drying column (2), for its humidification by means of the regeneration of its adsorption means.

## Description

### Technical field of the invention

The present invention corresponds to the technical field of air quality measuring equipment, which comprises a particle sensor, a gas sensor, air conduction means between both formed by conduction sections and a suction pump, and means of control of the equipment, and specifically a drying device for this measuring equipment.

### Background of the Invention

At present, the existing equipment for measuring air quality is designed and tested to work with very specific conditions, such as stable average temperatures, close to 25 °C and humidities that usually take two trends: average values (the more favorable), whose most usual value is 50% RH and dry air values (less than 5% RH), since commercial aerosol generation equipment uses this air in its particle generation process.

When the sensors work in percentages greater than 80%, the response is greatly affected with respect to laboratory values, since the particles undergo nucleation processes, that is, an increase or growth in the diameter of the particle.

Thus, the behavior of current air quality measuring systems, or air particle (PM) measurement systems, when the PM sensor works continuously (more than 72h) at low humidity levels approximately below 10%, is affected by the drying and/or fracturing processes suffered by the particles, modifying their usual properties, which affects the nature of the air, and therefore higher concentration measurements are obtained for the lower fractions compared to standard values.

There are currently four official methods for particle measurement. The first of these is the LSAPC, counters for particles contained in the air by light scattering. This apparatus is capable of counting and sizing individual particles contained in the air and recording the data of the dimensions in terms of the equivalent optical diameter.

The second method is the discrete particulate counter, which uses an apparatus capable of counting and sizing individual airborne particulates, in the range of 5 to 80 µm, with 20% resolution for calibration particles of a specified size by the manufacturer and with a maximum permissible error of 20% for a particle count with a specified size fit.

A third method involves time-of-flight particle sizing equipment and uses an apparatus for counting and sizing individual particles that defines their aerodynamic diameter by measuring the time required for a particle to adapt to a change in air speed. This is usually done by optically measuring the transit time of the particle after a change in speed of the fluid stream.

Finally, the fourth method is the microscopic measurement of the particles collected on a paper filter. It is a traditional method through collectors in which the collection is carried out by means of filtration or inertial effects, followed by a microscopic measurement of the number and size of the collected particles.

On the other hand, there are currently two types of sensors or commercial solutions capable of measuring suspended particles equal to or less than 2.5 µg/m³, and these are particle counters and nephelometers.

Particle counters measure the number of particles in a predetermined size range and display a histogram of the particles that exist in that range. In addition, it is capable of reporting the total particles per cubic meter. To be able to make accurate measurements per m³, you need flows greater than 2.5 l/min, which together with the size of the analyzed flow section (usually a circle), completes the dimensional analysis to obtain information in m³.

The other type of particle sensor is the so-called nephelometer, which provides information on the mass flow in µg/m³, that is, they estimate the density by dragging the particles, and transform this data, together with that of the optical sensor, in mass flows.

In addition, PM10 and PM2.5 are also reported as standard parameters, this time in units of µg/m³.

The detection of particle or dust sensors is based on the principle of diffraction of light, that is, when a ray of light encounters an obstacle, such as a particle, it cannot pass through it and generates a shadow or is deviated (depends on size and nature). These shadows and the set of light beams that reach the photodiode (light-sensitive sensor) are again transformed into an electrical signal, which is measurable and linearly dependent on the quantity and size of the particles.

At the same time as the count is performed, the diameter of the particles is determined, which allows the counts to be sorted into bins of defined size. The use of these size-specific silos, along with the assumption that all measured particles are spherical and have a standardized density, allows for accurate estimation of particle mass. This can be broken down into fractions depending on their size. The size of the particles is determined from the intensity of the scattered light, and the number of particles from the number of light pulses scattered by individual particles.

In general, the operation of a particle sensor consists in that the air is absorbed and forced to pass through a stable beam of light and controlled by lenses. This beam of light reflects off the photodiode, which is sensitive to light, and sends the signal to the photoelectric converter, which translates the mA into a signal that can be processed by computing.

Particle dimensions between 0.02 and 20 µm can be measured with time-of-flight equipment. An air sample is introduced into the equipment and accelerated by expansion through a nozzle in a partial vacuum, where the measurement area is located. All particles in this air sample are accelerated to equal the speed of the air in the measurement area. The acceleration rate of the particles varies inversely with the mass of the particle. The relationship between the air speed and the particle speed at the measurement point can be used to determine the aerodynamic diameter of the particle. Thus, knowing the pressure difference between the ambient air and the pressure in the measurement area, the air speed can be calculated directly. The speed of the particles is measured by means of the time of flight between two laser beams. Time-of-flight measuring equipment must measure the aerodynamic diameters of particles up to 20 µm.

Based on the concept of diffraction of light, a critical parameter for this sensor must be highlighted, which is the level of humidity in the medium, since humidity is made up of microparticles of water, which allow light to pass through, but deflect the beam or concentrate it, depending on the angle of incision. In addition, in a humid environment, some particles undergo conglomeration processes, that is, clots or groups of stuck particles are formed which, at the sensor level, act as a single large particle.

Thus, an increase in humidity completely influences the behavior of existing PM sensors on the market. It has been verified that in environments with humidity higher than 60%, the increase in ambient humidity during the night cycle influences the sensor's ability to obtain reliable and accurate data, since levels above 60% humidity in the environment cause a large scatter in the data retrieved from the system.

Therefore, there is a clear influence of humidity on the signal from this type of sensor that measures hygroscopic particles in the medium. This relationship is greater in PM2.5 than in PM10, since the larger the particle size, the device has a greater capacity to distinguish the effect of a solid than of a water molecule.

It is therefore necessary to find a way to control the humidity of the air in the devices for measuring its quality, to achieve uniformity in this parameter within predefined values as appropriate, to avoid affecting the results of the measurements. No device for this purpose or one that achieves this effect has been found in the state of the art.

### Description of the invention

The continuous particle meter, for air quality measuring equipment presented herein, refers to measuring equipment that includes a particle sensor, a gas sensor, air conduction means between both formed by conduction sections and by a suction pump, means of control of the equipment, and at least a first and second drying column that has an inlet or outlet for outside air.

In this continuous particle meter, the first and second drying columns include adsorption means with regenerative capacity inside.

Likewise, these two drying columns comprise two separate temperature and humidity sensors arranged in a first and second opposite end thereof, an infrared light bulb, a humidity filtering membrane with a smaller hole size than that of the particles to be treated, and such that it divides the interior space of the drying column into an passage area and drying of the air and a humidity retention area that has the adsorption means.

With this it is achieved that at least a first drying column is drying the inlet air that subsequently passes through the particle sensor and the gas sensor, and the drying function of this first column is maintained while the adsorption means of it has adsorption capacity.

Likewise, at least one second column is returning the humidity to the previously dried air before leaving the equipment, and this humidification function of the second column is maintained while its adsorption means are regenerated, releasing the previously adsorbed humidity.

An air quality measuring procedure using measuring equipment with a continuous particle meter as previously defined is also proposed herein.

This measurement procedure comprises the inlet of air through at least a first drying column of the continuous meter, for the adsorption of humidity from the air and its drying by means of an adsorption means, prior to its passage through the particle sensor and gas sensor as well as the air outlet through at least a second column, whose adsorption means are saturated with previously adsorbed humidity, for humidifying the air by regenerating said adsorption means, where the at least one solenoid valve and means of control of the continuous meter control the inlet and outlet direction of the air through one or the other drying columns alternately.

With the continuous particle meter for air quality measuring equipment that is proposed here, a significant improvement in the state of the art is obtained.

This is so because by generating a drying of the air humidity, it is possible to extend the useful life of the particle sensors. In addition, an increase in the reliability of the data obtained with the monitoring of suspended particles is achieved after eliminating or minimizing the influence of environmental factors on the particle sensors.

The implementation of drying columns improves the response, based on better correlation and regression results.

On the other hand, it prevents the sensor from working in extreme humidity or low temperature conditions, more common during night periods (where temperatures drop and humidity increases drastically), tropical climates, rainy areas, etc. where condensation conditions are usually reached due to high humidity, with humidities that are around between 80 and 86%.

Thanks to this continuous particle meter, it is possible to stabilize the humidity and temperature within the measurement system in a sustainable and efficient way and, in addition, with low maintenance cost, thus mitigating as much as possible the alteration of the measurements, which occur in measuring equipment both if they work for an excessive time at low humidity, which generates drying processes and/or fracturing of the particles, or if they work at excessive humidity, which produce nucleation processes, with the increase or growth of the particle diameter.

It also has the important advantage that, being a continuous meter, while at least one drying column is in charge of removing excessive humidity from the air, at least another column, which has its adsorption means previously saturated, is in charge of returning the humidity into the air before leaving the equipment.

In this way, these saturated adsorption means gradually lose their humidity, when it is returned to the air, and again acquire adsorption capacity, being ready for use in the drying phase, to remove humidity from the air at the moment when the adsorption means that were occupying the drying up to that moment are saturated.

Therefore, it is a continuous meter for very effective air quality measuring equipment, which allows solving existing problems in this field today.

### Brief description of the drawings

In order to help a better understanding of the characteristics of the invention, according to a preferred example of practical embodiment thereof, a series of drawings is provided as an integral part of said description where, for illustrative and non-limiting purposes, represented the following:
Figure 1.- Shows a diagram of the continuous particle meter for air quality measuring equipment, for a preferred embodiment.
Figure 2.- Shows a flowchart of the continuous particle meter for air quality measuring equipment with a first direction of air circulation, for a preferred embodiment.
Figure 3.- Shows a flow chart of the continuous particle meter for air quality measuring equipment with a second direction of air circulation, for a preferred embodiment.
Figure 4.- Shows a perspective view of a humidity filtering membrane of the continuous particle meter for air quality measuring equipment with a second direction of air circulation, for a preferred embodiment.
Figure 5.- Shows a perspective view of a filter column with a filtering membrane inside, for air quality measuring equipment with a second direction of air circulation, for a preferred embodiment.
Figure 6.- Shows an air flow circulation scheme for both directions of circulation, for air quality measuring equipment with a second direction of air circulation, for a preferred embodiment.

### Detailed description of a preferred embodiment of the invention

In view of the figures provided, it can be seen how in a preferred embodiment of the invention, the continuous particle meter for air quality measuring equipment, which is proposed here, is aimed at equipment that includes a particle sensor (3), a gas sensor (4), air conduction means between both formed by conduction sections (5) and a suction pump (6), means of control of the equipment, and at least a first and second drying column that has an inlet or outlet for the outside air. In this preferred embodiment of the invention, the meter is made up of two columns in total.

In this continuous meter, the first and second drying columns (1, 2) comprise internal adsorption means with regenerative capacity.

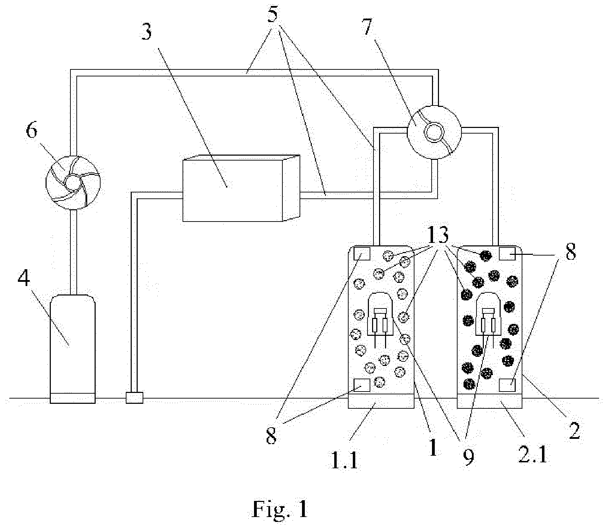

As shown in Figure 1, said first and second drying columns (1, 2) also comprise inside each temperature and humidity sensor (8) arranged in a first and second opposite end thereof, an infrared light bulb (9), a humidity filtering membrane (10) with a smaller hole size than that of the particles to be treated, and such that it divides the interior space of the drying column (1, 2) into a passage area (11) and drying of the air and a retention area (12) of the humidity that presents the adsorption means.

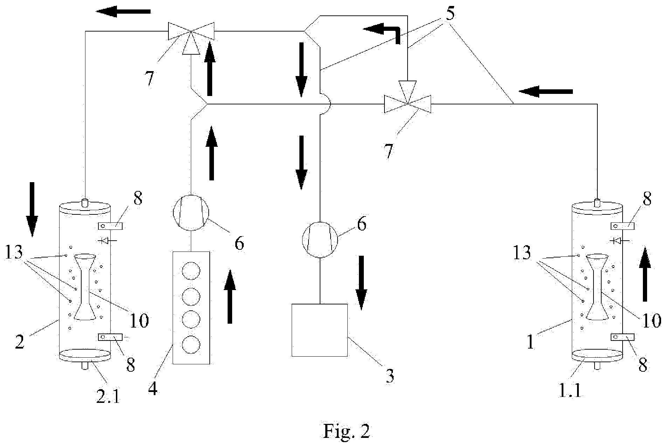

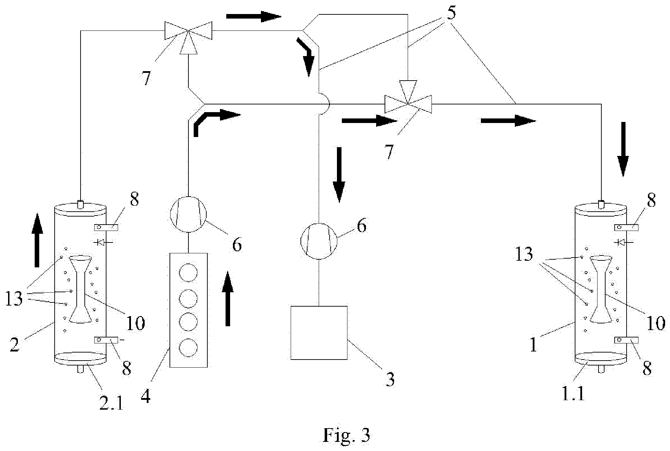

These first and second drying columns (1, 2) are connected to the equipment through at least one solenoid valve (7) connected in turn to the particle sensor (3) and to the suction pump (6). As can be seen in Figures 2 and 3, in this preferred embodiment each drying column is connected by means of a solenoid valve (7) respectively.

Thus, as can be seen in Figure 2, at least one first drying column (1), in this case one of the two existing ones, is drying the inlet air, which accesses this first drying column (1) through its inlet (1.1) and subsequently passes through the particle sensor (3). The drying function of this first drying column (1) is maintained as long as its adsorption means have adsorption capacity. Likewise, an inlet of air is produced through the gas sensor (4) and at least a second drying column (2), in this case the other existing column, is returning the humidity to the previously dried air before the exit of the equipment through the exit (2.1) existing in it. This humidification function of the second drying column (2) is maintained while its adsorption means are regenerated by releasing the previously adsorbed humidity.

Furthermore, in this case, this continuous meter comprises means of control formed by a control board with two relays for activation of at least one solenoid valve (7) and connections to the temperature and humidity sensors (8) and to the light bulb (9) of both columns.

In this embodiment, the at least one solenoid valve (7) is suitable for gases without vacuum pressure. Specifically, in this case, the meter has two 3/2 solenoid valves (7) for gases without vacuum pressure, combined, to be able to reverse the air flow, but in other embodiments, a single 5/3 valve can be used.

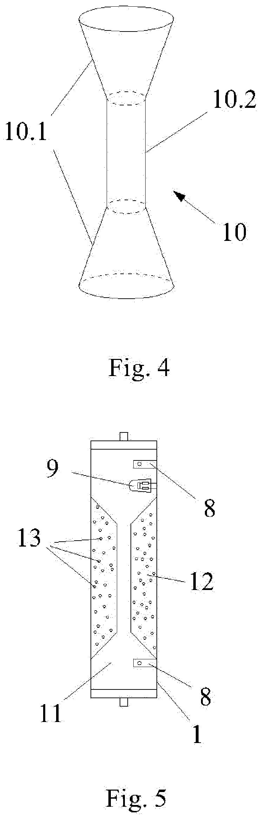

In this preferred embodiment, as shown in Figures 4 and 5, the humidity filtering membrane (10) has a longitudinal shape and is arranged between the first and second ends of the drying column (1, 2).

This filtering membrane (10) is made up of two end sections (10.1) with a frustoconical shape such that their larger base is connected to the first or second end of the filtering column (1, 2), respectively, and a central channel (10.2) connection between both end sections (10.1). The passage area (11) and drying of the air is formed by the space inside said filtering membrane (10) and, as shown in said Figure 5, the adsorption means are in the outer space to it, so that by having this filtering membrane (10) a passage size much smaller than that of the particles to be treated, it has the capacity to transfer humidity from the air to outer space to the filtering membrane (10), by being adsorbed by the filtering means, while the particles are retained together with the air in the interior space thereof.

In this preferred embodiment, the adsorption means are made up of a filling (13) of adsorbent material, being made up in this case specifically of silica gel. In addition, in this case, the silica gel has a sphere size between 2 and 7 mm and has a pH between 3.7 and 7.

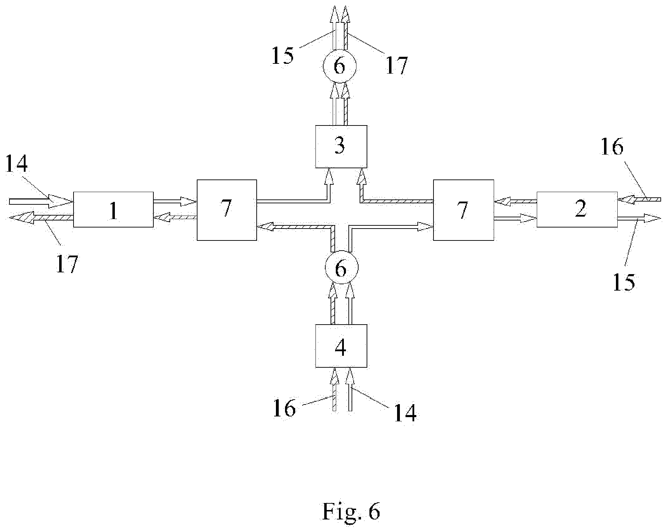

In this memory, an air quality measuring procedure is presented in turn by means of measuring equipment with a continuous particle meter as previously defined, which comprises the inlet of air (14) through at least a first column of drying (1) of the continuous meter, through an inlet (1.1) of the same, which in this case, as shown in Figures 2 and 6, it is through a single drying column, for the adsorption of humidity from the air and its drying by means of an adsorption means, prior to its passage through the particle sensor (3) and then the air outlet (15) of the meter. In Figure 6, this first direction of air circulation is represented by arrows without fillers.

Likewise, an inlet of air (14) is made through the gas sensor (4) and its output (15) is produced through at least a second drying column (2), in this case the other remaining drying column of the meter, through its outlet (2.1), whose adsorption means are saturated with previously adsorbed humidity, for humidifying the air, through the regeneration of said adsorption means, where the at least one solenoid valve (7) and means of control of the continuous meter control the direction of inlet of air and outlet through one or another drying column (1, 2) alternatively.

When the filtering media of the first filtering column (1) are saturated and those of the second filtering column (2) lose all the humidity they had, the two solenoid valves (7) of this meter reverse the airflow direction and an inlet of air (16) is made through the inlet (2.1) of the second drying column (2), which becomes the one that performs the drying of the air, prior to its passage through the particle sensor (3) and its exit (15) from the meter. As shown in Figures 3 and 6, an inlet of air (16) is also produced through the gas sensor (4) and in this case it is the first drying column (1) that is responsible for returning the humidity into the air, by desorption of the filler (13) of adsorbent material, before it exits (17) through said first drying column (1), which in this case presents an outlet (1.1) thereof. In Figure 6, this second direction of circulation has been represented by arrows with hatched filling.

The described embodiment is only an example of the present invention, therefore, the specific details, terms and phrases used herein are not to be construed as limiting, but are to be understood solely as a basis for the claims and as a representative basis that provides an understandable description as well as sufficient information for the person skilled in the art to apply the present invention.

## Claims

1. Continuous particle meter for air quality measuring equipment, comprising
- a particle sensor (3);
- a gas sensor (4);
- air conduction means between both formed by conduction sections (5) and by a suction pump (6);
- means of control of the equipment, and;
- at least a first and a second drying column (1, 2) that have an inlet or outlet for outside air;
**characterized in that** the first and second drying columns (1, 2) comprise inside:
- an adsorption means with regenerative capacity;
- two separate temperature and humidity sensors (8) arranged in a first and second opposite end thereof;
- an infrared light bulb (9);
- a humidity filtering membrane (10) with a smaller hole size than that of the particles to be treated, and such that it divides the interior space of the drying column into a passage area (11) and air drying, and a humidity retention area (12) that has the adsorption means.

2. Continuous meter for air quality measuring equipment, according to claim 1, **characterized in that** the first and second drying columns (1, 2) are connected to the equipment through at least one solenoid valve (7) connected to its once to the particle sensor (3) and to the suction pump (6).

3. Continuous meter for air quality measuring equipment, according to claim 2, **characterized in that** it comprises means of control formed by a control board with two relays for activation of at least one solenoid valve (7) and connections to the temperature and humidity sensors (8) and to the bulb (9) of both first and second columns (1, 2).

4. Continuous meter for air quality measuring equipment, according to any of claims 2 or 3, **characterized in that** the at least one solenoid valve (7) is suitable for gases without vacuum pressure.

5. Continuous meter for air quality measuring equipment, according to any of the preceding claims, **characterized in that** the humidity filtering membrane (10) is longitudinal in shape, and is arranged between the first and second ends of the drying column (1, 2), and is made up of two end sections (10.1) frustoconical in such a way that their larger base is connected to the first or second end of the drying column (1, 2) respectively and a central channel (10.2) connecting between both end sections (10.1), and where the passage area (11) and drying of the air is formed by the space inside said filtering membrane (10).

6. Continuous meter for air quality measuring equipment, according to any of the preceding claims, **characterized in that** the adsorption means are formed by a filling (13) of adsorbent material.

7. Continuous meter for air quality measuring equipment, according to claim 6, **characterized in that** the adsorbent material is made of silica gel.

8. Continuous meter for air quality measuring equipment, according to claim 7, **characterized in that** the silica gel has a sphere size between 2 and 7 mm and has a pH between 3.7 and 7.

9. Air quality measuring procedure using measuring equipment with a continuous particle meter as defined in claims 1 to 8, **characterized in that** it comprises:
- the inlet of air through at least a first drying column (1) of the continuous meter, for the adsorption of humidity from the air and its drying by means of an adsorption means, prior to its passage through the particle sensor (3) and their exit to the outside, and;
- the inlet of air through the gas sensor (4), and its outlet through at least a second drying column (2), whose adsorption means are saturated with previously adsorbed humidity, for humidifying the air through regeneration of said adsorption means;
- where the at least one solenoid valve (7) and a means of control of the continuous meter control the direction of inlet and outlet of air through one or the other drying columns (1, 2) alternately.
